# EUROPÄISCHE PATENTSCHRIFT

(11) **EP 2 542 489 B1**
(45) Veröffentlichungstag und Bekanntmachung des Hinweises auf die Patenterteilung: **15.03.2017**
(21) Anmeldenummer: 11711009.8
(22) Anmeldetag: 14.01.2011
(51) Int. Cl.: B65G 43/02, F16G 1/28, F16G 5/20

(54) **RIEMEN ZUR ÜBERTRAGUNG EINER ANTRIEBSBEWEGUNG, VORRICHTUNG ZUM ANTREIBEN EINES RIEMENS UND VERFAHREN ZUR INBETRIEBNAHME EINES RIEMENS**
BELT FOR TRANSMITTING A DRIVE MOTION, DEVICE FOR DRIVING A BELT AND METHOD FOR STARTING A BELT
COURROIE POUR LA TRANSMISSION D'UN MOUVEMENT D'ENTRAÎNEMENT, DISPOSITIF DESTINÉ À ENTRAÎNER UNE COURROIE ET PROCÉDÉ DE MISE EN SERVICE D'UNE COURROIE

(30) Priorität: 03.03.2010 DE 102010002551
(43) Veröffentlichungstag der Anmeldung: 09.01.2013
(73) Patentinhaber: Arntz Beteiligungs GmbH & Co. KG, 37671 Höxter (DE)
(72) Erfinder: BALLHAUSEN, Ulrich, 33014 Bad Driburg (DE)
(74) Vertreter: Ostermann, Thomas
(86) Internationale Anmeldenummer: PCT/DE2011/000037
(87) Internationale Veröffentlichungsnummer: WO 2011/107063

(56) Entgegenhaltungen:
- AU-A1- 2009 203 049
- DE-A1-102009 003 732
- DE-C1- 4 444 263
- JP-A- 2009 007 078
- US-A- 5 843 258
- US-B1- 6 264 577

## Beschreibung

Die Erfindung betrifft einen Riemen zur Übertragung einer Antriebsbewegung nach dem Oberbegriff des Patentanspruches 1.

Aus der DE 10 2006 002 118 A1 ist ein Riementrieb mit einem eine Markierung aufweisenden Riemen bekannt. Die Markierung ist als eine aktive Markierung ausgebildet, von der ein elektrisches bzw. magnetisches Feld oder optisches Strahlen erzeugt und ausgesendet werden. Sie kann beispielsweise als ein Hall-Sensor oder als ein Transponder ausgebildet sein. Beabstandet zu dem Riemen ist ortsfest ein Detektor angeordnet, der die von der Markierung ausgehenden Signale erfasst, während sich die Markierung an dem Detektor vorbeibewegt. Durch das Auslesen der Markierung kann auf die Position und die Geschwindigkeit des Riemens und insbesondere auf eine verschleiß-, toleranz- bzw. temperaturbedingte Positionsänderung bzw. Verschiebung des Riemens geschlossen werden. Jedoch kann nicht sichergestellt werden, dass zum Betrieb des Riementriebs allein zugelassene Riemen eingesetzt werden, die den Spezifikationen des Herstellers beispielsweise hinsichtlich Drehzahl und Zugkraft genügen.

Aus der US 6 264 577 B1 ist ein Riemen mit einem integrierten Datenspeicher bekannt, wobei der Datenspeicher im Bereich einer Karkasse und im Bereich einer neutralen Faser angeordnet sein kann. Eine Werkstoffhäufung weist dieser Riemen nicht auf.

Aus der JP 2009 007 078 A ist ein Riemen bekannt, in dem ein Datenspeicher eingebettet angeordnet ist. Der Datenspeicher ist im Bereich einer Karkasse bzw. einer neutralen Faser angeordnet, jedoch nicht im Bereich einer Werkstoffhäufung.

Aus der DE 44 44 263 C1 ist ein Riemen mit einem Datenspeicher bekannt, der in einem Riemenkörper des Riemens einvulkanisiert angeordnet ist. Der Datenspeicher befindet sich im Bereich der neutralen Faser. Der Riemenkörper weist weder eine Karkasse noch eine Werkstoffhäufung auf.

Aus der US 5 843 258 A ist ein Riemen mit einem mehrlagigen Riemenkörper bekannt, der auf einer Gewebebahn mit einem Identifizierungszeichen versehen ist. Das Identifizierungszeichen ist großflächig auf einer Rückseite des Riemenkörpers angeordnet, sodass er nicht innerhalb des Riemenkörpers integriert ist.

Aus der AU 2009 203 049 A1 ist ein Riemen zur Übertragung einer Antriebsbewegung mit einem Riemenkörper aus einem elastischen Werkstoff bekannt, in dem eine Karkasse zur Erhöhung der Festigkeit des Riemenkörpers integriert angeordnet ist. In dem Riemenkörper ist ein Datenspeicher integriert, mittels dessen riemenidentifizierende Informationen gespeichert werden können. Der Datenspeicher ist im Bereich einer neutralen Faser und im Bereich einer Karkasse angeordnet. Eine Werkstoffhäufung weist der Riemenkörper nicht auf.

Die nachveröffentlichte DE 10 2009 003 732 A1 offenbart einen Riemen mit einem integrierten Transponder, der in einer neutralen Faser des Riemens angeordnet ist. Eine Karkasse bzw. Werkstoffanhäufung weist der Riemen nicht auf.

Aufgabe der vorliegenden Erfindung ist es daher, einen Riemen derart weiterzubilden, dass die Betriebssicherheit und Zuverlässigkeit weiter erhöht werden. Hierbei gilt es, den Fertigungsaufwand möglichst gering zu halten.

Zur Lösung der Aufgabe weist die Erfindung die Merkmale des Patentanspruchs 1 auf.

Der besondere Vorteil der Erfindung besteht darin, dass der Riemen, der Riementyp, der Hersteller des Riemens, geometrische Parameter wie die Bauform oder die Länge sowie funktionale Parameter wie die maximal zulässige Drehzahl oder die übertragbare Kraft in einem in dem Riemen selbst angeordneten Datenspeicher abgelegt werden können. Diese riemenidentifizierende Information kann mittels einer geeigneten Leseeinheit schnell und zuverlässig ausgelesen und elektronisch weiterverarbeitet werden. Die entsprechende Information kann beispielsweise für logistische Zwecke verwendet werden, indem vor dem Versand des Riemens, bei der Lagerung desselben in ein Warenlager oder bei der Entnahme desselben aus dem Warenlager in einfacher Weise geprüft und sichergestellt werden kann, dass es sich um den spezifizierten Riemen handelt. Ferner kann der Riemen, sofern dieser durch eine individuelle Riemennummer gekennzeichnet ist, vom Hersteller für die Verwendung gesperrt und zurückgerufen werden, sofern beispielsweise Materialfehler bei anderen Riemen der gleichen Produktionscharge festgestellt wurden. Das elektronische Auslesen des Datenspeichers ist hierbei nicht nur in einfacher Weise, sondern zudem schnell und äußerst zuverlässig möglich. Ablese- bzw. Übertragungsfehler können bei elektronischer Auslesung und Weiterverarbeitung der Daten vermieden werden.

Sofern der Riemen in einem Riementrieb oder dergleichen verbaut ist, kann der in dem Riemen integrierte Datenspeicher während des Betriebs des Riementriebs bzw. bei der Inbetriebnahme desselben ausgelesen werden. Die ausgelesene Information kann mit Referenzdaten verglichen werden, in denen Identifikationsinformationen zu dem für diesen Riementrieb zugelassenen bzw. erprobten Riementypen abgespeichert sind. Abhängig vom Ergebnis des Vergleichs kann die Antriebsbewegung stillgesetzt bzw. freigegeben werden.

Im Rahmen der Erfindung ist ein Stillsetzen der Antriebsbewegung bzw. eine Blockade derselben so zu verstehen, dass der Anlauf des Riemens aus dem Stillstand unterbunden bzw. der bereits angelaufene Riemen kurz nach dessen Anlauf wieder gestoppt wird. Die Blockade des noch stillstehenden Riemens kommt insbesondere dann in Betracht, wenn der Riemen im Stillstand so positioniert ist, dass eine Leseeinheit den Datenspeicher auslesen kann. Das kurzfristige Anfahren und anschließende Stoppen des Riemens kommt insbesondere dann in Betracht, wenn der Datenspeicher erst durch die in Gang gesetzte Antriebsbewegung in den Lesebereich der Leseeinheit gelangt. Ein Freigeben der Antriebsbewegung umfasst analog hierzu sowohl die Erlaubnis zum Anfahren des Riemens aus dem Stillstand als auch die nachträgliche Autorisierung der Antriebsbewegung nach dem Auslesen des an der Leseeinheit vorbei bewegten Datenspeichers und dem erfolgreichen Abgleich der in dem Datenspeicher gespeicherten riemenidentifizierenden Informationen mit gespeicherten Referenzdaten. Als gespeicherte Referenzdaten kommen beispielsweise Informationen zu zulässigen Riementypen, individuelle Riemenidentifikationsnummern und/oder Herstellerangaben in Betracht. Ebenso können im Sinne einer Sperrliste einzelne Riemen (identifiziert über ihre individuelle Riemennummer) oder Chargen von Riemen von der Verwendung ausgeschlossen werden, sofern beispielsweise ein Materialfehler aufgetreten ist oder ein sonstiger Rückruf vom Hersteller vorliegt. Weiterhin können bei Bedarf Leistungsbeschränkungen (beispielsweise hinsichtlich Drehzahl oder Drehmoment) realisiert werden, wenn Fehlchargen, falsche Randbedingungen, falsche Ausführungen oder dergleichen erkannt werden.

Der Riemenkörper kann beispielsweise durch Vulkanisieren hergestellt werden. In diesem Fall wird der Datenspeicher beim Aufbau des Riemenkörpers in die zu vulkanisierende Gummimatrix eingebettet. Alternativ kann der Riemenkörper mittels geeigneter Spritzgusstechnologie hergestellt werden. Hierbei wird der Datenspeicher in das Formwerkzeug eingebracht und umspritzt. In Frage kommen beispielsweise die folgenden Werkstoffe: vernetzte bzw. thermoplastische Polyurethane oder thermoplastische Elastomer Vulkanisate (TPE-V, Handelsname z. B. Santoprene als Blend aus Polypropylen und vulkanisiertem EPDM).

Nach der Erfindung ist der Datenspeicher im Bereich der neutralen Faser des Riemenkörpers, die bei einer Biegung um eine quer zur Riemenlängsrichtung orientierten Biegeachse nicht auf Zug und/oder Druck beansprucht wird, im Bereich der Karkasse und im Bereich einer lokalen Werkstoffhäufung des Riemenkörpers angeordnet, wobei die lokale Werkstoffhäufung durch einen Zahn eines Zahnriemens oder einer in Riemenlängsrichtung erstreckten Rippe eines Rippenbandes gebildet ist. Vorteilhaft ist der Datenspeicher hierdurch geschützt in dem Riemenkörper angeordnet. Mechanische Einwirkungen, insbesondere Stöße oder Schwingungen, thermische Einflüsse sowie Chemikalien, die während der Lagerung oder des Betriebs des Riemens mit diesem in Berührung kommen können, können den Datenspeicher nicht schädigen.

Zur Umhüllung des Datenspeichers mit dem Werkstoff des Riemenkörpers wird der Datenspeicher bereits vor dem Vulkanisieren bzw. Spritzgießens des Riemenkörpers in die zu vulkanisierende Gummimatrix bzw. den Formraum eingebracht, so dass der Datenspeicher nach dem Vulkanisieren bzw. Spritzgießen von dem Riemenkörper umgeben ist. Der Datenspeicher ist derart geschützt angeordnet, dass der Datenspeicher die beim Vulkanisieren bzw. Spritzgießen auftretenden hohen Temperaturen von bis zu 180° C sowie die hohen Drücke von bis zu 15 bar unbeschädigt übersteht. Das Herstellungsverfahren ist so besonders wirtschaftlich und großserientauglich.

Nach einer Weiterbildung der Erfindung ist der Datenspeicher Teil eines integrierten Schaltkreises, der zusammen mit einer mit dem integrierten Schaltkreis gekoppelten Antenne einen RFID-Transponder bildet. Vorteilhaft wird hierdurch ein von außen berührungslos auslesbarer, passiver Datenspeicher geschaffen, der weder zur Speicherung der Daten noch zur Übertragung derselben mit einem Energiespeicher verbunden sein muss. Hierdurch kann auf das Einbringen eines Energiespeichers, beispielsweise einer Batterie, in den Riemenkörper verzichtet werden. Mit dem Verzicht auf den Energiespeicher wird zudem eine hohe, theoretisch sogar nahezu unendliche Lebensdauer erreicht. Darüber hinaus sind RFID-Transponder als Großserienprodukte sehr günstig, so dass eine hohe Wirtschaftlichkeit erzielt werden kann.

Nach einer Weiterbildung der Erfindung sind der Datenspeicher, der integrierte Schaltkreis bzw. die Antenne zumindest abschnittsweise von einer Schutzhülle umgeben. Das Vorsehen einer Schutzhülle erhöht die Widerstandsfähigkeit der hierin eingeschlossenen Funktionskomponenten (integrierter Schaltkreis mit Datenspeicher, Antenne) weiter und verhindert überdies den direkten Kontakt der Funktionskomponenten mit dem Werkstoff des Riemenkörpers bzw. der Karkasse, so dass einer Beschädigung der Funktionskomponente beispielsweise durch mechanische Reibung bzw. chemische Reaktionen vorgebeugt ist. Darüber hinaus schützt die Schutzhülle den Datenspeicher während des Vulkanisierens.

Nach einer Weiterbildung der Erfindung ist die Schutzhülle dicht ausgebildet. Die Schutzhülle enthält keine oder nur wenig Luft. Vorteilhaft wird hierdurch die Lebensdauer des Datenspeichers weiter erhöht und einer Verunreinigung vorgebeugt.

Nach einer Weiterbildung der Erfindung ist die Schutzhülle aus einem Glaswerkstoff bzw. aus Kunststoff gebildet. Vorteilhaft handelt es sich hierbei um reaktionsarme Werkstoffe, deren exakte chemische Zusammensetzung so gewählt werden kann, dass es zu keiner Reaktion mit den von der Schutzhülle umgebenen Funktionskomponenten einerseits und dem Werkstoff des Riemenkörpers bzw. der Karkasse andererseits kommt. Die Langzeitstabilität des den Datenspeicher aufweisenden Riemens kann hierdurch weiter verbessert werden. Ferner kann durch das Vorsehen einer Schutzhülle aus einem harten, temperaturfesten Werkstoff (Glas oder geeignete Kunststoffe) die mechanische und thermische Belastung auf den Datenspeicher während des Vulkanisierens und/oder des Gebrauchs weiter reduziert werden.

Nach der Erfindung wird der Datenspeicher einmalig oder wiederkehrend ausgelesen. Insbesondere bei der wiederkehrenden Auslesung des Datenspeichers kann während des Normalbetriebs und in Kenntnis der Geschwindigkeit der Antriebsbewegung aus dem Ausbleiben eines erwarteten Empfangssignals auf einen Defekt des Riemens
und/oder der Leseeinheit geschlossen werden. Ferner können beim wiederkehrenden Auslesen des Datenspeichers zusätzlich zu der riemenidentifizierenden Information in dem Datenspeicher zumindest temporär gespeicherte Betriebsparameter des Riemens bzw. der Vorrichtung ausgelesen werden. Die Betriebsparameter können hierbei mittels Sensoren erfasst werden, die in dem Riemen und/oder außerhalb desselben angeordnet sind. Als Betriebsparameter kommen beispielsweise Temperatur, Dehnung und Druck in Frage. Die Betriebsparameter können benutzt werden, um einen bevorstehenden Ausfall des Riemens frühzeitig zu erkennen oder um Aussagen zum Betriebsverhalten der mittels des Riemens angetriebenen Last zu bestimmen.

Weitere Vorteile der Erfindung ergeben sich aus den weiteren Unteransprüchen.

Die Erfindung wird nachfolgend anhand von Zeichnungen näher erläutert.

Es zeigen:
- Figur 1a: einen Längsschnitt durch einen Riemen nach einer ersten Ausführungsform mit einem in dem Riemen umhüllt angeordneten Datenspeicher,
- Figur 1b: einen Querschnitt durch den Riemen gemäß Figur 1 a entlang des Schnitts A-A,
- Figur 2a: einen Längsschnitt durch einen Riemen nach einer zweiten Ausführungsform mit einem in dem Riemen umhüllt angeordneten Datenspeicher,
- Figur 2b: einen Querschnitt durch den Riemen gemäß Figur 2a entlang des Schnitts B-B,
- Figur 3: eine Seitenansicht einer Vorrichtung zum Antrieb des Riemens und
- Figur 4: eine Draufsicht auf die Vorrichtung gemäß Figur 3.

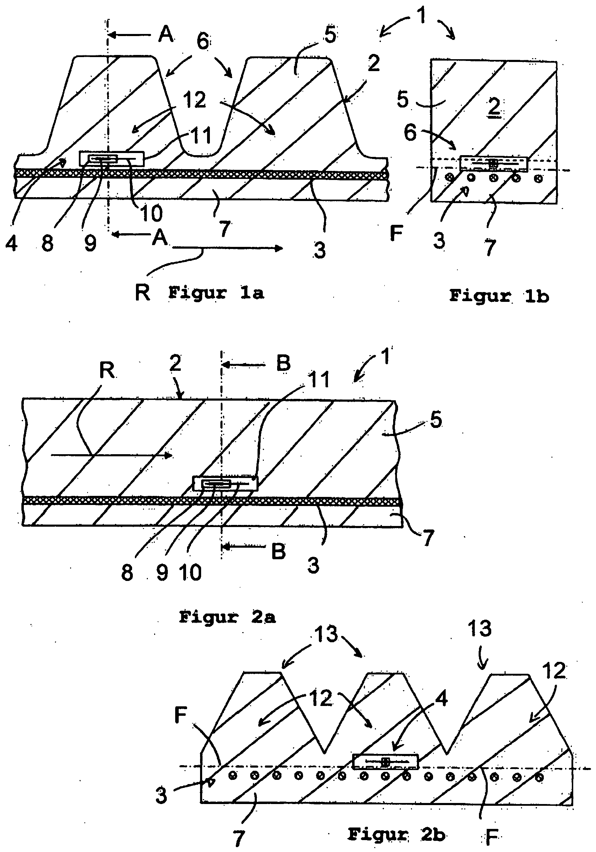

Ein als ein Zahnriemen ausgebildeter Riemen 1 gemäß der Figuren 1 a und 1 b weist als zentrale Komponenten einen Riemenkörper 2 aus einem vulkanisierten, elastischen Werkstoff, einen sich entlang des Riemenkörpers 2 in eine Riemenlängsrichtung R erstreckende und aus einer Anzahl an einzelnen Corden gebildete Karkasse 3 sowie einen RFID-Transponder 4 auf. Ein derartiger Riemen 1 wird beispielsweise in einem Riementrieb zur Übertragung einer Antriebsbewegung von einer Antriebsachse auf eine Abtriebsachse eingesetzt.

Der Riemenkörper 2 weist einen Eingriffsbereich 5 mit in Riemenlängsrichtung R hintereinander angeordneten Zähnen 6 sowie einen an den Eingriffsbereich 5 angrenzenden Rückenbereich 7 auf. In dem Rückenbereich 7 erstreckt sich die Karkasse 3 in Riemenlängsrichtung R. Die Karkasse 3 dient dazu, die Festigkeit bzw. Stabilität des Riemens 1 in Riemenlängsrichtung R zu erhöhen.

Benachbart zu der Karkasse 3, ist der RFID-Transponder 4 angeordnet. Der RFID-Transponder 4 wird durch einen integrierten Schaltkreis 8, der einen Datenspeicher 9 aufweist und mit einer Antenne 10 gekoppelt ist, gebildet. Der RFID-Transponder 4 ist von einer Schutzhülle 11 umgeben. Die Schutzhülle 11 - und mit ihr der RFID-Transponder 4 sowie der Datenspeicher 9 - sind vollständig vom Werkstoff des Riemenkörpers 2 umgeben. Die Schutzhülle 11 ist aus einem Glaswerkstoff gebildet. Sie ist luftdicht ausgebildet. In der Schutzhülle 11 ist keine Luft eingeschlossen.

Der RFID-Transponder 4 ist im Bereich der Karkasse 3 und einer neutralen Faser F des Riemens 1 in dem Riemenkörper 2 umhüllt angeordnet. Die neutrale Faser F ist bei einer Biegung des Riemens 1 um eine quer zur Riemenlängsrichtung R orientierte Biegeachse B weder auf Zug noch auf Druck beansprucht. Der Datenspeicher 9 ist somit nur einer geringen Biegebelastung ausgesetzt. Ferner ist der RFID-Transponder 4 im Bereich einer lokalen Werkstoffhäufung 12, welche durch den großen homogenen Gummibereich des Zahns 6 gebildet ist, angeordnet. Die Anordnung des RFID-Transponders 4 im Bereich der Karkasse 3, der neutralen Faser F und der durch den Zahn 6 gebildeten lokalen Werkstoffhäufung 12 macht es möglich, den RFID-Transponder 4 beim Aufbau des Riemens 1 in die zu vulkanisierende Gummimatrix einzubringen und anschließend zu vulkanisieren. Wider Erwarten hat sich gezeigt, dass die so bestimmte Lage in Verbindung mit der den RFID-Transponder 4 umgebenden Schutzhülle 11 dazu führt, dass die beim Vulkanisieren auftretenden hohen Temperaturen von bis zu 180° C sowie die hohen Drücke von bis zu 15 bar die RFID-Transponder 4 nicht beschädigen.

Nach einer weiteren Ausführungsform der Erfindung gemäß den Figuren 2a und 2b ist der Riemen 1 als ein Rippenband mit sich in Riemenlängsrichtung R erstreckenden Rippen 13 ausgebildet. RFID-Transponder 4 ist auch hier im Bereich der neutralen Faser F, benachbart zu der Karkasse 3 und im Bereich einer durch die mittlere der drei Rippen 13 definierten lokalen Werkstoffhäufung 12 angeordnet. Der RFID-Transponder 4 weist auch nach dieser Ausführungsform eine Schutzhülle 11 auf und kann vor dem Vulkanisieren in die den Riemenkörper 2 bildende Gummimatrix eingebracht und vulkanisiert werden, ohne dass es zur Schädigung des RFID-Transponders 4 kommt.

Gleiche Bauteile und Bauteilfunktionen sind mit den gleichen Bezugsziffern versehen.

Der Riemen 1 kann nicht nur als ein Zahnriemen oder als ein Rippenband ausgebildet sein. Für den Riemen 1 ist jede beliebige Bauform denkbar. Beispielsweise kann der RFID-Transponder 4 in Keilriemen, Flachriemen oder Kraftbänder sowie in Fördergurte eingebracht werden.

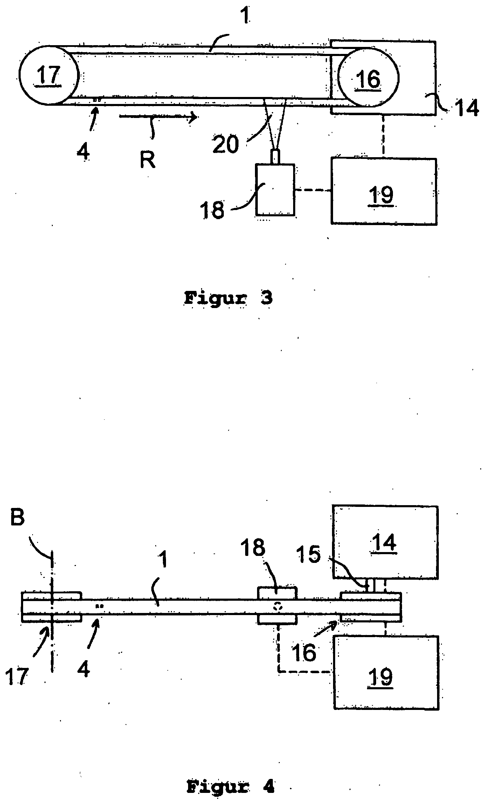

Eine Vorrichtung zum Antreiben des Riemens 1 gemäß der Figuren 3 und 4 weist eine Antriebseinheit 14, ein von der Antriebseinheit 14 angetriebenes und über eine Welle 15 mit derselben verbundenes Antriebsrad 16, ein mittels des Riemens 1 von dem Antriebsrad 16 betätigtes Umlenkrad 17, eine Leseeinheit 18 zum Auslesen des in dem Riemen 1 angeordneten Datenspeichers 9 des RFID-Transponders 4 sowie eine mit der Leseeinheit 18 und der Antriebseinheit 14 zusammenwirkende Steuereinheit 19 auf. In dem Datenspeicher 9 des RFID-Transponders 4 sind den Riemen 1 identifizierende Informationen, beispielsweise der Riementyp, das Herstellungsdatum des Riemens 1, eine Chargennummer, Angaben zum Hersteller, geometrische Angaben wie die Länge des Riemens 1 bzw. funktionale Angabe wie beispielsweise Zugkraft oder Drehzahl gespeichert. Die in dem Datenspeicher 9 gespeicherten riemenidentifizierenden Informationen sind mittels der Leseeinheit 18 berührungslos auslesbar.

In Abhängigkeit von dem Ergebnis eines Vergleichs der riemenidentifizierenden Information, die aus dem Datenspeicher 9 ausgelesen ist, mit in der Steuereinheit 19 gespeicherten Referenzdaten, welche Angaben zu den für die Vorrichtung zugelassenen Riemen enthalten, ist der Antriebseinheit 14 ein Ansteuersignal zuführbar zur Blockade und/oder Freigabe der Antriebsbewegung des Riemens 1.

Zum Freigeben und/oder Blockieren der Antriebsbewegung des Riemens 1 wird wie folgt verfahren. Nach der Wartung der Vorrichtung und insbesondere nach einem Austausch des Riemens 1 wird bei der Inbetriebnahme eine Antriebsbewegung auf den Riemen 1 übertragen. Infolge der Antriebsbewegung gelangt der Datenspeicher 9 in den Lesebereich 20 der Leseeinheit 198. Die Leseeinheit 18 sendet ein Trägersignal, welches von der Antenne 10 erfasst, von dem integrierten Schaltkreis 8 in Abhängigkeit von den auf dem Datenspeicher 9 gespeicherten riemenidentifizierenden Informationen moduliert und an die Leseeinheit 18 zurückübersandt wird. Das rückübersandte und von der Leseeinheit 18 aufgenommene Signal wird demoduliert. Hierdurch werden die in dem Datenspeicher 9 gespeicherten riemenidentifizierenden Informationen aus dem empfangenen Signal separiert und der Steuereinheit 19 zugeführt. Von der Steuereinheit 19 werden die riemenidentifizierenden Informationen mit den gespeicherten Referenzdaten verglichen. Sofern der Riemen 1 zur Verwendung in der Vorrichtung zugelassen ist, das heißt die aus dem Datenspeicher 9 ausgelesene riemenidentifizierende Information und die Referenzdaten positiv abgeglichen werden, wird die Antriebsbewegung des Riemens 1 freigegeben. Hierzu wird ein entsprechendes Ansteuersignal von der Steuereinheit 19 an die Antriebseinheit 14 übertragen. Stimmen die Referenzdaten und die aus dem Datenspeicher 9 ausgelesene riemenidentifizierende Information nicht überein, wird die Antriebsbewegung gestoppt.

Ebenso ist es möglich, dass sich der RFID-Transponder 4 bei der Inbetriebnahme der Vorrichtung im Lesebereich 20 der Leseeinheit 18 befindet. In diesem Fall muss der Riemen 1 nicht angetrieben werden, um den RFID-Transponder 4 in den Lesebereich 20 zu fördern. Stattdessen kann der Abgleich der in dem Datenspeicher 9 gespeicherten riemenidentifizierende Information mit den Referenzdaten unmittelbar und bei stehenden Riemen 1 vorgenommen werden. Bei einem positiven Abgleich wird die Antriebsbewegung freigegeben, wobei ein entsprechendes Ansteuersignal von der Steuereinheit 19 an die Antriebseinheit 14 übertragen wird. Bei Nichtübereinstimmung der Referenzdaten mit der riemenidentifizierenden Information wird die Antriebsbewegung blockiert.

Ein Abgleich der in dem Datenspeicher 9 gespeicherten riemenidentifizierenden Information mit den Referenzdaten ist nicht nur nach Wartungsarbeiten oder beim ersten Anfahren der Vorrichtung nach einem Stillstand derselben möglich. Ebenso ist denkbar, dass wiederholt, beispielsweise in regelmäßigen oder zufälligen Zeitabständen der Datenspeicher 9 von der Leseeinheit 18 ausgelesen wird. Auf diese Weise können beispielsweise Informationen über die Geschwindigkeit der Antriebsbewegung ermittelt werden. Wird für eine vorbestimmte Zeit kein Antwortsignal von dem RFID-Transponder 4 empfangen, kann hieraus auf einen Defekt des Riemens 1 oder Leseeinheit 18 geschlossen werden. In diesem Fall können entsprechende Sicherungsmaßnahmen, beispielsweise ein Bremsvorgang, eingeleitet werden.

Insbesondere beim wiederkehrenden Auslesen des Datenspeichers 9 können zusätzlich zu der riemenidentifizierenden Information weitere Daten mittels der Leseeinheit 18 aus dem Datenspeicher 9 ausgelesen und von der Steuereinheit 19 weiterverarbeitet werden. Beispielsweise ist es möglich, dass Daten von nicht dargestellten Sensoren erfasst und in dem Datenspeicher 9 gespeichert werden. Die Sensoren können wie der RFID-Transponder 4 selbst in dem Riemenkörper 2 des Riemens 1 integriert angeordnet sein. Ebenso können die Sensoren von außen auf den Riemen 1 appliziert werden oder außerhalb des Riemens 1 angeordnet sein. Als Daten können beispielsweise Informationen über die Dehnung, die in dem Riemen wirkende Kraft oder Temperaturinformationen sensorisch erfasst und in dem Datenspeicher 9 gespeichert werden. Nach dem Auslesen dieser zusätzlichen Betriebsparameter kann die Steuereinheit 19 dieselben auswerten und beispielsweise zur Überwachung des Verschleißes des Riemens 1 auswerten.

## Patentansprüche

1. Riemen zur Übertragung einer Antriebsbewegung mit einem Riemenkörper (2) aus einem elastischen Werkstoff und mit einer in Riemenlängsrichtung (R) erstreckten und von dem Riemenkörper (2) zumindest abschnittsweise umgebenen Karkasse (3) zur Erhöhung der Festigkeit des Riemenkörpers (2) in Riemenlängsrichtung (R), wobei in dem Riemenkörper (2) ein Datenspeicher (9) angeordnet ist zur Speicherung von Daten, dass als Daten wenigstens eine riemenidentifizierende Information in dem Datenspeicher (9) gespeichert ist, wobei die mittels einer Antriebseinheit (14) erzeugte Antriebsbewegung in Abhängigkeit von der riemenidentifizierenden Information stillsetzbar und/oder freigebbar ist, dass der Datenspeicher (9) durch den Werkstoff des Riemenkörpers (2) umhüllt im Bereich einer neutralen Faser (F) des Riemenkörpers (2) und im Bereich der Karkasse (3) desselben angeordnet ist, **dadurch gekennzeichnet, dass** der Datenspeicher (9) benachbart zu der Karkasse (3) und im Bereich einer lokalen Werkstoffhäufung (12) des durch Vulkanisieren oder Spritzgießen hergestellten Riemenkörpers (2) angeordnet ist, wobei die lokale Werkstoffhäufung (12) durch einen Zahn (6) des als Zahnriemen ausgebildeten Riemens (1) oder durch eine Rippe (13) des als Rippenband ausgebildeten Riemens (1) gebildet ist.

2. Riemen nach Anspruch 1, **dadurch gekennzeichnet, dass** der Datenspeicher (9) Teil eines integrierten Schaltkreises (8) ist, der zusammen mit einer mit dem integrierten Schaltkreis (8) gekoppelten Antenne (10) einen RFID-Transponder (4) bildet und berührungslos auslesbar ist.

3. Riemen nach einem der Ansprüche 1 oder 2, **dadurch gekennzeichnet, dass** der Datenspeicher (9) und/oder der integrierte Schaltkreis (8) und/oder die Antenne (10) zumindest abschnittsweise von einer Schutzhülle (11) umgeben sind.

4. Riemen nach einem der Ansprüche 1 bis 3, **dadurch gekennzeichnet, dass** die Schutzhülle (11) dicht ausgebildet ist, wobei in der Schutzhülle (11) kein oder nur wenig Luft eingeschlossen ist.

5. Riemen nach einem der Ansprüche 1 bis 4, **dadurch gekennzeichnet, dass** die Schutzhülle (11) aus einem Glaswerkstoff und/oder aus Kunststoff gebildet ist.

## Claims

1. A belt for transmitting a drive motion, comprising a belt body (2) made of an elastic material and a carcass (3) for increasing the strength of the belt body (2) in a belt longitudinal direction (R), said carcass extending in the belt longitudinal direction (R) and being surrounded by the belt body (2) at least in some sections, wherein a data memory (9) for storing data is arranged in the belt body (2), wherein at least one belt-identifying information item is stored as data in the data memory (9), wherein the drive motion generated by means of a drive unit (14) can be stopped and/or enabled as a function of the belt-identifying information item, wherein the data memory (9), encased by the material of the belt body (2), is arranged in the region of a neutral fibre (F) of the belt body (2) and in the region of the carcass (3) thereof, **characterized in that** the data memory (9) is arranged adjacent to the carcass (3) and in the region of a local material accumulation (12) of the belt body (2) produced by vulcanization or injection moulding, wherein the local material accumulation (12) is formed by a tooth (6) of the belt (1) configured as a toothed belt or by a rib (13) of the belt (1) configured as a ribbed belt.

2. The belt according to claim 1, **characterized in that** the data memory (9) is part of an integrated circuit (8) which, together with an antenna (10) coupled to the integrated circuit (8), forms an RFID transponder (4) and can be read in a contactless manner.

3. The belt according to any one of claims 1 or 2, **characterized in that** the data memory (9) and/or the integrated circuit (8) and/or the antenna (10) is/are surrounded by a protective sheath (11) at least in some sections.

4. The belt according to any one of claims 1 to 3, **characterized in that** the protective sheath (11) is configured in a sealed manner, wherein no air or only a little air is enclosed within the protective sheath (11).

5. The belt according to any one of claims 1 to 4, **characterized in that** the protective sheath (11) is formed of a glass material and/or of plastic.

## Revendications

1. Courroie pour la transmission d'un mouvement d'entraînement, avec un corps de courroie (2) en matériau élastique et avec une carcasse (3), qui, s'étendant dans le direction longitudinale du corps de courroie (R) et étant entourée, au moins par sections, par ledit corps de courroie (2), est destinée à augmenter la solidité du corps de courroie (2) dans la direction longitudinale du corps de courroie (R), sachant que, pour la mémorisation de données, une mémoire de données (9) est agencée dans le corps de courroie (2), que, en tant que données, au moins une information, qui identifie la courroie, est mémorisée dans la mémoire de données (9), sachant que le mouvement d'entraînement, généré au moyen d'une unité d'entraînement (14), est bloqué et / ou libéré en fonction de l'information identifiant la courroie, la mémoire de données (9) étant enveloppée par le matériau du corps de courroie (2), dans la région d'une fibre neutre (F) dudit corps de courroie (2), et disposée dans la région de la carcasse (3) de celui-ci, **caractérisée en ce que** la mémoire de données (9) avoisine la carcasse (3) et est disposée dans la région d'une accumulation locale de matériau (12) du corps de courroie (2) fabriqué par vulcanisation ou par moulage par injection, sachant que l'accumulation locale de matériau locale (12) est formée par une dent (6) de la courroie (1), réalisée en forme de courroie dentée, ou par une nervure (13) de la courroie (1), réalisée en forme de courroie nervurée.

2. Courroie selon la revendication 1, **caractérisée en ce que** la mémoire de données (9) fait partie d'un circuit de commutation intégré (8), qui, en commun avec une antenne (10), couplé avec ledit circuit de commutation (8), forme un transpondeur RFID (4) et peut être lu sans contact.

3. Courroie selon revendication 1 ou 2, **caractérisée en ce que** la mémoire de données (9) et / ou le circuit de commutation intégré (8) et / ou l'antenne (10) sont entourés, au moins par sections, d'une enveloppe de protection (11).

4. Courroie selon l'une des revendications 1 à 3, **caractérisée en ce que** l'enveloppe de protection (11) est de conception étanche, sachant que l'enveloppe de protection (11) ne renferme pas d'air ou que peu d'air seulement.

5. Courroie selon l'une des revendications 1 à 4, **caractérisée en ce que** l'enveloppe de protection (11) est réalisée en matériau en ver et / ou en matière synthétique.
